# EUROPÄISCHE PATENTSCHRIFT

(11) **EP 0 486 075 B1**
(45) Veröffentlichungstag und Bekanntmachung des Hinweises auf die Patenterteilung: **30.11.1994**
(21) Anmeldenummer: 91202538.4
(22) Anmeldetag: 01.10.1991
(51) Int. Cl.: B01D 24/46

(54) **Filterbehälter mit Ausspülrinne**
Filter receptacle with rinsing channel
Récipient de filtre avec conduit de dégorgement

(30) Priorität: 15.11.1990 DE 4036357
(43) Veröffentlichungstag der Anmeldung: 20.05.1992
(73) Patentinhaber: METALLGESELLSCHAFT Aktiengesellschaft, 60015 Frankfurt (DE)
(72) Erfinder: Bertram, Steffen, W-6000 Frankfurt am Main (DE); Schmitt, Karlheinz, W-6239 Kriftel (DE)

(56) Entgegenhaltungen:
- DE-A- 1 947 229
- DE-A- 3 308 287
- US-A- 1 748 898
- US-A- 2 218 355
- US-A- 3 444 078

## Beschreibung

Die Erfindung betrifft einen Behälter für körniges Filtermaterial mit einem das Filtermaterial tragenden Sieb- oder Düsenboden und mindestens einer auf dem Boden angeordneten Rinne zum Ausspülen des Filtermaterials, wobei Spülflüssigkeit durch Düsen in die Rinne geleitet wird.

Filterbehälter mit Ausspülrinnen sind bekannt und z.B. in der DE-A 19 47 229 und im US-A 3 444 078 beschrieben. Im Behälter der DE-A 19 47 229 ist auf dem Boden der Rinne ein Spülrohr angeordnet, welches mit Löchern versehen ist und Spülflüssigkeit in die Rinne hinein verteilt. Es hat sich aber gezeigt, daß das Filtermaterial bei dieser Anordnung teilweise in der Rinne hängenbleibt und ein sauberes Ausspülen nicht oder kaum erreichbar ist.

Der Erfindung liegt die Aufgabe zugrunde, bei der eingangs genannten Vorrichtung für ein einfaches, problemloses Ausspülen des körnigen Filtermaterials zu sorgen. Erfindungsgemäß geschieht dies dadurch, daß oberhalb der Rinne ein Rohr für Spülflüssigkeit angeordnet ist, welches mehrere, schräg in die Rinne gerichtete Düsen aufweist, wobei der Winkel zwischen der Längsachse des Rohrs und der Sprührichtung einer Düse 10 bis 50° beträgt, und daß der Abstand A, gemessen zwischen den Oberkanten der Rinne und der Längsachse des Rohrs, das 0,2- bis 2-fache des Außendurchmessers D des Rohrs beträgt. Durch diese Anordnung des Rohrs über der Rinne mit schräggestellten Düsen kann eine starke Schubkraft auf das auszuspülende Filtermaterial ausgeübt werden. Gleichzeitig wird der Zulauf des Filtermaterials vom Bereich oberhalb des Düsenbodens zur Rinne nicht behindert.

Zweckmäßigerweise bildet man die Rinne mit einem gekrümmten Querschnittsprofil aus. Dadurch werden Ecken vermieden, in denen sich Filtermaterial leicht festsetzen kann.

Ausgestaltungsmöglichkeiten des Filterbehälters werden mit Hilfe der Zeichnung erläutert. Es zeigt:
- Fig. 1: einen Längsschnitt durch den Filterbehälter entlang der Linie I-I in Fig. 2,
- Fig. 2: einen Querschnitt durch den Filterbehälter der Fig. 1, geschnitten entlang der Linie II-II und
- Fig. 3: in vergrößerter Darstellung einen Querschnitt durch das Spülrohr und die Rinne.

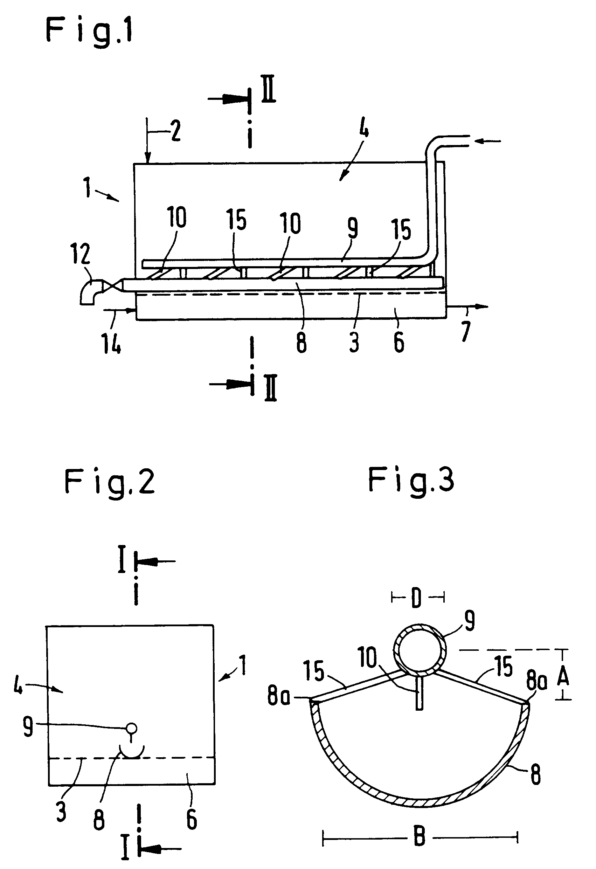

Gemäß Fig. 1 und 2 weist der Filterbehälter (1) im oberen Bereich einen Zulauf (2) für die zu behandelnde Flüssigkeit, z.B. Wasser, auf. Über dem Düsenboden (3) befindet sich ein im einzelnen nicht dargestelltes Bett (4) aus körnigem Filtermaterial, z.B. Aktivkohle, Sand oder Bims. Von der Sammelkammer (6) unterhalb des Düsenbodens (3) fließt die behandelte Flüssigkeit durch die Leitung (7) ab.

Um das Filtermaterial durch Ausspülen aus dem Behälter (1) entfernen zu können, ist eine oben offene Rinne (8) auf dem Düsenboden (3) angeordnet, über der ein Spülrohr (9) verläuft. Dem Spülrohr wird von außen Spülflüssigkeit, z.B. Wasser, zugeführt, die dann durch Düsen (10) in die Rinne (8) hinein austritt. Die Düsen sind schräg nach vorn zum verschließbaren Auslaß (12) der Rinne (8) gerichtet, dabei beträgt der Winkel zwischen der Längsachse des Rohrs (9) und der Sprührichtung einer Düse (10) 10 bis 50° und vorzugsweise höchstens 40°. Je nach Breite des Behälters (1) sind über dem Düsenboden (3) eine oder mehrere Rinnen (8) mit zugehörigem Spülrohr (9) angeordnet.

Um das Filtermaterial vom Düsenboden (3) vollständig in die Rinne (8) hineinzubewegen, ist die Sammelkammer (6) mit einer Zufuhrleitung (14) für Spülwasser und/oder Luft ausgerüstet. Dieses Fluid oder Fluidgemisch tritt von unten durch den Düsenboden (3) in das Filterbett ein und hebt das Filtermaterial an, so daß es in die Rinne (3) fließen kann.

Das Spülrohr (9) ist durch Stützen (15) über der Rinne (8) so angeordnet, daß der Zulauf des Filtermaterials zur Rinne (8) nicht behindert ist. Weitere Einzelheiten ergeben sich aus Fig. 3. So beträgt der Abstand (A), gemessen zwischen den Oberkanten (8a) der Rinne und der Längsachse des Rohrs (9) das 0,2- bis 2-fache und vorzugsweise mindestens das 0,5-fache des Außendurchmessers (D) des Rohrs. Für den Abstand (B) der beiden Oberkanten (8a) der Rinne wählt man zweckmäßigerweise das 2- bis 8-fache des Außendurchmessers (D) des Rohrs und vorzugsweise das 3- bis 7-fache dieses Außendurchmessers (D). Die Düsen (10) sind am Rohr üblicherweise im Abstand von 10 bis 70 cm und vorzugsweise von 20 bis 50 cm angeordnet. Optimale Ausspülbedingungen erreicht man, wenn man die Rinne (8) nicht kantig, sondern mit gekrümmtem Querschnittsprofil ausbildet. In Fig. 3 bildet das Querschnittsprofil einen Halbkreis.

## Patentansprüche

1. Behälter für körniges Filtermaterial mit einem das Filtermaterial tragenden Sieb- oder Düsenboden (3) und mindestens einer auf dem Boden angeordneten Rinne (8) zum Ausspülen des Filtermaterials, wobei Spülflüssigkeit durch Düsen in die Rinne geleitet wird, dadurch gekennzeichnet, daß oberhalb der Rinne ein Rohr (9) für Spülflüssigkeit angeordnet ist, welches mehrere, schräg in die Rinne gerichtete Düsen (10) aufweist, wobei der Winkel zwischen der Längsachse des Rohrs und der Sprührichtung einer Düse 10 bis 50° beträgt, und daß der Abstand (A), gemessen zwischen den Oberkanten (8a) der Rinne und der Längsachse des Rohrs, das 0,2- bis 2-fache des Außendurchmessers (D) des Rohrs beträgt.

2. Behälter nach Anspruch 1, dadurch gekennzeichnet, daß die Rinne ein gekrümmtes Querschnittsprofil aufweist.

3. Behälter nach Anspruch 1 oder 2, dadurch gekennzeichnet, daß der Abstand (B) der beiden Oberkanten der Rinne das 2- bis 8-fache des Außendurchmessers (D) des Rohrs beträgt.

4. Behälter nach Anspruch 1 oder einem der folgenden, dadurch gekennzeichnet, daß die Düsen am Rohr im Abstand von 10 bis 70 cm angeordnet sind.

## Claims

1. A container for granular filter material, comprising a sieve or nozzle bottom (3) carrying the filter material and at least one trough (8) arranged on the bottom for rinsing out the filter material, rinsing liquid being conveyed into the trough through nozzles, characterized in that a pipe (9) for rinsing liquid is arranged above the trough, which pipe (9) comprises a plurality of nozzles (10) directed obliquely into the trough, the angle between the longitudinal axis of the pipe and the spraying direction of a nozzle being from 10 to 50°, and in that the distance (A), measured between the top edges (8a) of the trough and the longitudinal axis of the pipe, is 0.2 to 2 times the external diameter (D) of the pipe.

2. A container according to claim 1, characterized in that the trough has a curved cross-sectional shape.

3. A container according to claim 1 or claim 2, characterized in that the distance (B) between the two top edges of the trough is 2 to 8 times the external diameter (D) of the pipe.

4. A container according to claim 1 or either of the following claims, characterized in that the nozzles arranged on the pipe are spaced by from 10 to 70 cm.

## Revendications

1. Récipient de matériau filtrant en grains, comprenant un fond (3) perforé ou à buses portant le matériau filtrant et au moins un conduit (8) disposé sur le fond et destiné au dégorgement du matériau filtrant, du liquide de lavage étant envoyé par des buses dans le conduit, caractérisé en ce qu'au-dessus du conduit est prévu un tuyau (9) pour du liquide de lavage, qui comporte plusieurs buses (10) dirigées de manière inclinée dans le conduit, l'angle entre l'axe longitudinal du tuyau et la direction de projection d'une buse étant compris entre 10 et 50°, et en ce que la distance (A) mesurée entre le bord (8a) supérieur du conduit et l'axe longitudinal du tuyau, représente de 0,2 à 2 fois le diamètre (D) extérieur du tuyau.

2. Récipient suivant la revendication 1, caractérisé en ce que le conduit a, en section transversale, un profil incurvé.

3. Récipient suivant la revendication 1 ou 2, caractérisé en ce que la distance (B) entre les deux bords supérieurs du conduit représente de 2 à 8 fois le diamètre (D) extérieur du tuyau.

4. Récipient suivant la revendication 1 ou l'une des suivantes, caractérisé en ce que les buses sont disposées sur le tuyau à une distance de 10 à 70 cm.
